# EUROPÄISCHE PATENTSCHRIFT

(11) **EP 0 447 426 B1**
(45) Veröffentlichungstag und Bekanntmachung des Hinweises auf die Patenterteilung: **02.06.1993**
(21) Anmeldenummer: 90900052.3
(22) Anmeldetag: 06.12.1989
(51) Int. Cl.: B26D 5/04, F16J 10/02

(54) **PERFORIERGERÄT**
PERFORATOR
PERFORATEUR

(30) Priorität: 09.12.1988 DE 3841492; 03.08.1989 DE 3925667
(43) Veröffentlichungstag der Anmeldung: 25.09.1991
(73) Patentinhaber: BONNET, Werner, D-71642 Ludwigsburg (DE)
(72) Erfinder: BONNET, Werner, D-71642 Ludwigsburg (DE)
(74) Vertreter: Vogel, Georg
(86) Internationale Anmeldenummer: DE8900754
(87) Internationale Veröffentlichungsnummer: WO9006215

(56) Entgegenhaltungen:
- EP-A- 0 238 686
- DE-C- 3 439 199
- GB-A- 2 074 492
- US-A- 3 892 156

## Beschreibung

Die Erfindung betrifft ein Perforiergerät mit einer in einem U-förmigen Lagerblock drehbar gelagerten Perforierscheibe, bei dem der Lagerblock mittels einer doppelseitig beaufschlagbaren Kolben-Zylinder-Einheit in die Bewegungsbahn des zu perforierenden Gutes bringbar und wieder aus dieser herausführbar ist, wobei die Kolben-Zylinder-Einheit in einem mit einem Maschinenträger verbindbaren Befestigungsteil untergebracht ist, in dem auch Führungsbolzen des Lagerblockes verstellbar geführt sind und den Lagerblock unverdrehbar zum Befestigungsteil festlegen, bei dem der Kolben mit Dichtungsringen bzw. Dichtungselementen versehen ist und eine Kolbenstange aufweist, die außerhalb der Kolben-Zylinder-Einheit mit dem Lagerbock verbunden ist.

Ein Perforiergerät dieser Art ist durch die DE-C-3439 199 bekannt. Dabei ist das Befestigungsteil als offener Kasten ausgebildet, dessen Boden dem Lagerblock zugekehrt ist und der dem Lagerblock abgekehrt mittels eines Deckels verschlossen ist. Zur Verstellung des Lagerblockes mit der Perforierscheibe ist eine handelsübliche Kolben-Zylinder-Einheit verwendet, die aus einem in einem Zylindergehäuse untergebrachten Kolben mit Kolbenstange besteht.

Diese Kolben-Zylinder-Einheit wird in dem kastenförmigen Befestigungsteil untergebracht. Die Führungsbolzen für den Lagerblock müssen daher einen Abstand aufweisen, der größer ist als die Summe aus dem Durchmesser des Zylindergehäuses und dem Durchmesser der Führungsbuchsen für die Führungsbolzen des Lagerblockes. Dadurch ist eine Mindestgröße des Perforiergerätes vorgegeben.

Es ist Aufgabe der Erfindung, ein Perforiergerät der eingangs erwähnten Art im Aufbau zu vereinfachen und dabei auch die Größe des Perforiergerätes zu reduzieren.

Diese Aufgabe wird nach der Erfindung einmal dadurch gelöst, daß das quaderförmige Befestigungsteil als Zylinder ausgebildet ist und dazu eine von der dem Lagerblock zugekehrten Seite ausgehende Sacklochbohrung aufweist, in der der Kolben verstellbar geführt ist, daß die Sacklochbohrung mittels einer Verschlußbuchse verschlossen ist, durch die die Kolbenstange herausgeführt ist, und daß die Sacklochbohrung dem lagerblock zugekehrt in einen im Durchmesser vergrößerten Endabschnitt übergeht, der einen Absatz zur Anlage der Verschlußbuchse bildet, oder daß der Zylinder als Befestigungsteil plattenförmig ausgebildet und in die Ebene der Perforierscheibe ausgerichtet ist, daß in einer quaderförmigen, abgedichteten Ausnehmung des Zylinders ein plattenförmiger Kolben verstellbar geführt ist, dessen Kolbenstange im Zylinder verstellbar ist und daß beide quer zur Verstellrichtung des Kolbens verlaufende Seiten mit den Dichtungselementen versehen sind, die allseitig zur Ausnehmung des Zylinders hin abdichten.

Das Befestigungsteil bildet in dieser Ausgestaltung das Zylindergehäuse der Kolben-Zylinder-Einheit und braucht keinen Deckel. Der Abstand der beiden Führungsbolzen des Lagerblockes kann kleiner gewählt werden, so daß die Baugröße des Perforiergerätes insgesamt verkleinert wird. Die maßgebende Größe für den Abstand der Führungsbolzen ist nun der Durchmesser der Sacklochbohrung, die dem Innendurchmesser des Zylindergehäuses des bekannten Perforiergerätes entspricht oder die Abmessung der quaderförmigen Ausnehmung im Befestigungsteil sowie der Durchmesser der Führungsbuchsen der Führungsbolzen des Lagerblockes.

Ist nach einer Ausgestaltung vorgesehen, daß die Verschlußbuchse mittels eines Sicherungsringes in dem Endabschnitt der Sacklochbohrung festgelegt und in Anlage an dem Absatz gehalten ist, dann ist der Verstellweg des Kolbens begrenzt und die Kolbenstange zusätzlich geführt.

Eine absolut unverkantete Führung des Lagerblockes wird dadurch erreicht, daß die Führungsbolzen des Lagerblockes in Führungsbuchsen geführt sind, die in Bohrungen des quaderförmigen Befestigungsteiles eingesetzt und an beiden Enden mittels Sicherungsringen unverschiebbar in den Bohrungen gehalten sind. Der Einbau der Führungsbuchsen ist erleichtert und dadurch noch verbessert, daß die Bohrungen sich nur über einen Teil. der Dicke des quaderförmigen Befestigungsteils erstrecken und dem Lagerblock abgekehrt in im Durchmesser vergrößerte Endabschnitte übergehen, die auf die Aufnahme des Sicherungsringes zur Festlegung der Führungsbuchsen ausgelegt und mittels eines Gewindestopfens verschlossen sind.

Die Festlegung des Perforiergerätes an dem Maschinenträger wird auf einfache Weise dadurch gelöst, daß das quaderförmige Befestigungsteil mit einem L-förmigen, einstückig angeformten Teil eine Befestigungsklammer bildet, wobei der dem Befestigungsteil abgekehrte Schenkel des Teils mit einem Durchgangsgewinde zur Aufnahme einer Spannschraube versehen ist.

Die einfache Herstellung des Befestigungsteiles wird nach einer Ausgestaltung dadurch ermöglicht, daß die Ausnehmung als Durchbruch im Zylinder ausgebildet ist, in die ein Vierkantrohrabschnitt als Kolbenführung dicht eingesetzt ist.

Die offenen Stirnseiten des Vierkantrohrabschnittes schließen sich dicht an die zugekehrten Seiten der Ausnehmung im Zylinder an. Dabei ist nach einer weiteren Ausgestaltung vorgesehen, daß der Vierkantrohrabschnitt mit seinen freien Seitenwänden bündig mit den zugekehrten Seiten des plattenförmigen Zylinders abschließt.

Die Kolben-Zylinder-Einheit kann nach einer weiteren Ausgestaltung auch so ausgelegt sein, daß die Ausnehmung als Durchbruch im Zylinder ausgebildet ist und daß nach dem Einsetzen des Kolbens in die Ausnehmung diese mittels zweier Abdeckplatten dicht abgedeckt und der Zylinderraum für den Kolben vervollständigt ist.

In beiden Fällen ist vorteilhafterweise vorgesehen, daß die Abmessung des Zylinders in Richtung der Drehachse der Perforierscheibe gleich der zugeordneten Abmessung des Lagerblockes entspricht.

Die doppelseitige Ansteuerung der Kolben-Zylinder-Einheit wird einfach dadurch ermöglicht, daß die Ansteuerleitungen für die Kolben-Zylinder-Einheit in den Zylinder eingebracht sind und im Bereich der quer zur Bewegungsrichtung des Kolbens gerichteten Seiten in die Ausnehmung des Zylinders einmünden und in einer parallel zur Verstellrichtung des Kolbens verlaufenden Seite als Schraubanschlüsse zugänglich sind.

Die dichte Verstellbarkeit der Kolbenstange im Zylinder wird nach einer Ausgestaltung dadurch erreicht, daß die Kolbenstange mittels eines Dichtungselementes abgedichtet ist, das mittels eines Verschlußstückes in einem erweiterten Absatz der Bohrung im Zylinder für die Aufnahme der Kolbenstange gehalten ist.

Die Funktion des Zylinders als Befestigungsteil wird einfach dadurch erhalten, daß der Zylinder außerhalb der Kolben-Zylinder-Einheit in dem dem Lagerblock abgekehrten Endbereich eine im Querschnitt T-förmige Befestigungsaufnahme aufweist, in die eine Gewindebohrung für eine Feststellschraube einmündet.

Die Erfindung wird anhand von in den Zeichnungen dargestellten Ausführungsbeispielen näher erläutert. Es zeigt:
- Fig. 1: in Seitenansicht mit teilweise geschnittenen Bereichen ein erstes Ausführungsbeispiel eines Perforiergerätes nach der Erfindung, auf die Breitseite der Perforierscheibe gesehen,
- Fig. 2: die Ansicht des Perforiergerätes nach Fig. 1, auf die Stirnseite der Perforierscheibe gesehen,
- Fig. 3: ein anderes Ausführungsbeispiel eines Perforiergerätes nach der Erfindung in Richtung der Drehachse der Perforierscheibe gesehen, wobei der plattenförmige Kolben in einem Vierkantrohrabschnitt verstellbar ist, der in eine Ausnehmung eines plattenförmigen Zylinders dicht eingesetzt ist, und
- Fig. 4: ein weiteres Perforiergerät in Richtung senkrecht zur Drehachse der Perforierscheibe gesehen, wobei der plattenförmige Kolben in einem dicht zusammengesetzten Zylinder verstellbar geführt ist.

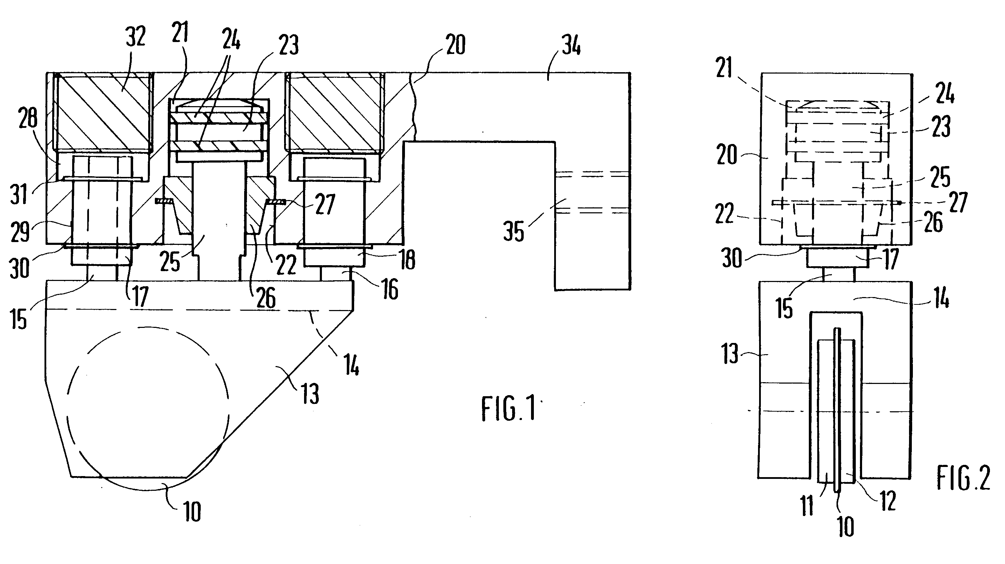

Die Perforierscheibe 10 ist bei dem Ausführungsbeispiel nach den Fig. 1 und 2 zwischen den beiden Haltescheiben 11 und 12 festgelegt und in den beiden Seitenschenkeln des U-förmigen Lagerblockes 13 drehbar gelagert. Dazu kann der Lagerbolzen für die Perforierscheibe 10 mittels Kugellager in den Seitenschenkeln des Lagerblockes 13 gelagert sein.

Das Befestigungsteil 20 ist quaderförmig mit dem L-förmig angeformten Teil 34, das mit dem Lagerblock 20 eine Befestigungsklammer bildet, mit der das Perforiergerät an dem Maschinenträger befestigt wird. Der dem Lagerblock 20 abgekehrte Schenkel des L-förmigen Teils 34 weist ein Durchgangsgewinde 35 für eine Spannschraube auf.

Der Steg 14 des Lagerblockes 13 ist mittels der beiden Führungsbolzen 15 und 16 in Führungsbuchsen 17 und 18 verstellbar geführt. Wie an der Führungsbuchse 17 gezeigt ist, wird in das Befestigungsteil 20 die Bohrung 29 zur Aufnahme der Führungsbuchse 17 eingebracht. Die Bohrung 29 geht dem Lagerblock 13 abgekehrt in den im Durchmesser erweiterten Endabschnitt 28 über, der so groß ist, daß der Sicherungsring 31 auf die Führungsbuchse 17 aufgebracht werden kann, die in den Endabschnitt 28 ragt. Die Führungsbuchse 17 steht an der dem Lagerblock 13 zugekerhten Seite des Befestigungsteils 20 vor, so daß der Sicherungsring 30 aufgebracht werden kann. Die Sicherungsringe 30 und 31 legen die Führungsbuchse 17 unverschiebbar in der Bohrung 29 fest. In gleicher Weise ist auch die Führungsbuchse 18 für den Führungsbolzen 16 in dem Befestigungsteil 20 festgelegt. Der Endabschnitt 28 wird mittels des Gewindestopfens 32 verschlossen, der in das Gewinde des Endabschnittes 28 eingeschraubt wird. Der Verschluß kann auch mittels eines Verschlußstopfens vorgenommen werden, der mit Paß- und/oder Preßsitz in dem Endabschnitt 28 gehalten ist.

Zwischen den beiden Führungsbuchsen 27 und 18 ist die Kolben-Zylinder-Einheit zur Verstellung des Lagerblockes 13 angeordnet.

Das Zylindergehäuse wird durch das Befestigungsteil 20 selbst gebildet. In die dem Lagerblock 13 zugekehrte Seite des Befestigungsteils 20 ist die Sacklochbohrung 21 eingebracht, in der der mit Dichtungsringen 24 versehene Kolben 23 abgedichtet verstellbar ist. In die Sacklochbohrung 21 münden die Anschlußkanäle, so daß der Kolben 23 doppelseitig beaufschlagbar und in beiden Richtungen verstellbar ist. Die Sacklochbohrung 21 geht dem Lagerblock 13 zugekehrt in den im Durchmesser vergrößerten Endabschnitt 22 über, wodurch ein Absatz zur Anlage der Verschlußbuchse 26 entsteht. Diese Verschlußbuchse 26 wird mittels des Sicherungsringes 27 in dem Endabschnitt 22 festgelegt und in Anlage an dem Absatz zur Sacklochbohrung 21 gehalten. Die Kolbenstange 25 ist in der Verschlußbuchse 26 zusätzlich geführt und herausgeführt mit dem Lagerblock 13, d.h. dessen Steg 14, fest verbunden.

Der Aufbau des Perforiergerätes ist, was das Befestigungsteil 20 und die Kolben-Zylinder-Einheit betrifft, sehr vereinfacht und läßt eine wesentlich kleinere Bauweise zu, ohne die Funktionsweise nachteilig zu beeinflussen.

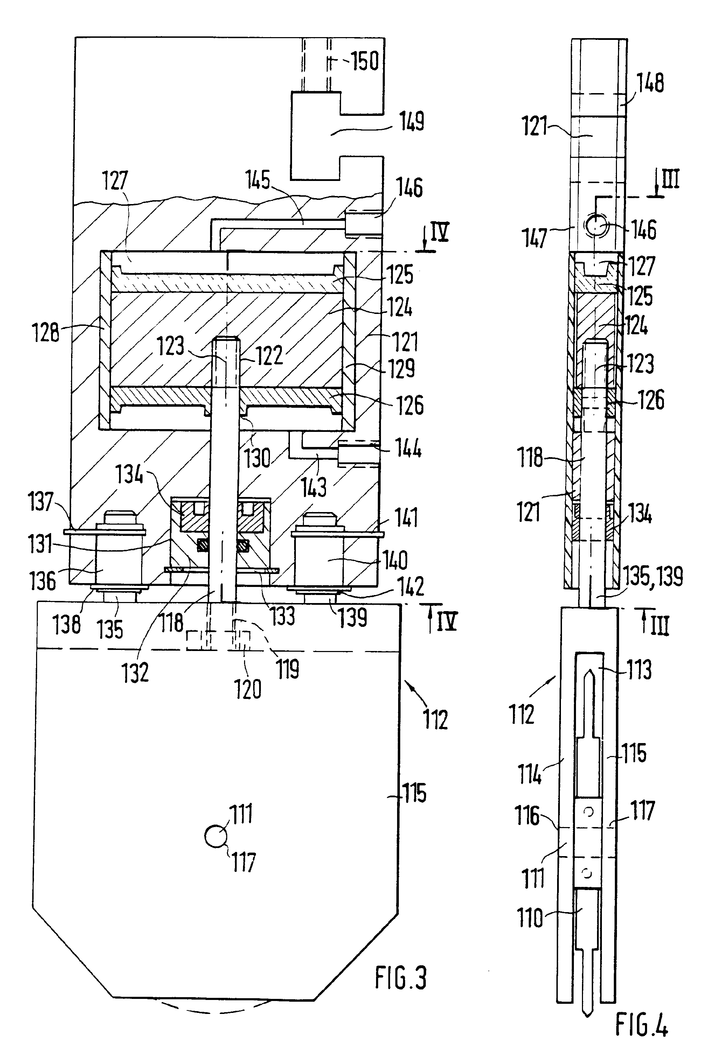

Bei den Ausführungsbeispielen nach Fig. 3 und 4 ist die Perforierscheibe 110 mit der Drehachse 111 in Bohrungen 116 und 117 der Lagerplatten 114 und 115 des U-förmigen Lagerblockes 112 drehbar gelagert. Dabei kann die Drehachse 111 feststehend und nur die Perforierscheibe 110 drehbar sein. Es kann aber auch die Perforierscheibe 110 und die Drehachse 111 gemeinsam drehbar sein.

Die Verstellbewegung wird mittels der Kolbenstange 118 auf den Lagerblock 112 übertragen, die über die doppelseitig beaufschlagbare Kolben-Zylinder-Einheit gesteuert wird. Die Anordnung und Ausgestaltung der Kolben-Zylinder-Einheit ist hier von ausschlaggebender Bedeutung, um gerade in Richtung der Drehachse der Perforierscheibe 110 eine möglichst kleine Abmessung zu bekommen, die im wesentlichen nur noch durch die Abmessung des Lagerblockes 112 bestimmt wird.

Die unverdrehbare Führung des Lagerblockes 112 übernehmen die beiden Führungsbolzen 135 und 139, die zu beiden Seiten der Kolbenstange 118 angeordnet und in den Lagerbuchsen 136 und 140 geführt sind. Diese Lagerbuchsen 136 und 140 sind in Sacklochbohrungen des plattenförmigen Zylinders eingesetzt und mittels der Sicherungsringe 137 und 138 bzw. 141 und 142 darin gehalten.

Die Kolbenstange 118 läuft in das Gewindeteil 119 aus, das in die Gewindeaufnahme 120 des Lagerblockes 112 eingeschraubt ist. Die Gewindeaufnahme 120 kann auch eine Mutter sein. Das obere Ende der Kolbenstange 118 läuft ebenfalls in ein Gewindeteil 123 aus, das in die Gewindeaufnahme 122 des Kolbens 124 eingeschraubt ist.

Bei dem Ausführungsbeispiel nach Fig. 3 dient das Befestigungsteil als Zylinder 121. Der Zylinder 121 ist plattenförmig ausgebildet und hat eine Dicke, die der Abmessung des Lagerblockes 112 in Richtung der Drehachse 11 der Perforierscheibe 10 entspricht. In den Zylinder 121 ist die rechteckförmige Ausnehmung 127 eingebracht, die die Platte voll durchsetzt. In die Ausnehmung 127 ist ein Vierkantrohrabschnitt als Kolbenführung dicht eingesetzt, von dem die beiden Seitenwände 128 und 129 geschnitten sind. Der Kolben 124 ist ebenfalls plattenförmig und im Querschnitt auf den Innen-Querschnitt des Vierkantrohrabschnittes abgestimmt. Der Kolben 124 trägt auf den beiden quer zur Bewegungsrichtung gerichteten Seiten die Dichtungselemente 125 und 126, die auf allen vier Seiten zum Vierkantrohrabschnitt hin abdichten. Die Steuerleitungen 143 und 145 für die doppelseitige Beaufschlagung der Kolben-Zylinder-Einheit münden in den quer zur Bewegungsrichtung des Kolbens 124 verlaufenden Seiten der Ausnehmung 127 in den vom Vierkantrohrabschnitt umschlossenen Zylinderraum.

Die Steuerleitungen 143 und 145 sind auf eine Schmalseite des Zylinders 121 geführt und enden dort als Schraubanschlüsse 144 und 146.

Der Zylinder 121 trägt in dem dem Lagerblock 112 abgekehrten Endbereich die T-förmige Befestigungsaufnahme 149, in die eine Gewindebohrung 150 für eine Feststellschraube einmündet, um das Perforiergerät an einem Maschinenträger befestigen zu können.

Die Kolbenstange 118 wird abgedichtet in dem Zylinder 121 geführt, wie das Dichtungselement 134 zeigt, das in einem erweiterten Absatz 131 der Bohrung für die Kolbenstange 118 gehalten ist. Der Halt wird von dem Verschlußstück 132 vorgenommen, das wiederum mittels eines Sicherungsringes 133 im Zylinder gehalten ist. Der plattenförmige Zylinder 121 dient als Befestigungsteil, als Führung für die Kolbenstange und die Führungsbolzen des Lagerblockes 12 sowie zur Aufnahme des Vierkantrohrabschnittes als Kolbenführung.

Beim Ausführungsbeispiel nach Fig. 4 ist der Zylinder 121 mittels der beiden Abdeckplatten 147 und 148 vervollständigt, die die Ausnehmung 127 im plattenförmigen Zylinder 121 beidseitig dicht verschließen. Eine getrennte Kolbenführung in Form eines Vierkantrohrabschnittes ist dann nicht mehr erforderlich.

In Fig. 3 ist mit der Linie IV-IV schematisch der Verlauf der Schnittlinie beim Ausführungsbeispiel nach Fig. 4 und in Fig.4 mit der Linie III-III der Schnittverlauf beim Ausführungsbeispiel nach Fig. 3 angegeben.

## Patentansprüche

1. Perforiergerät mit einer in einem U-förmigen Lagerblock (13) drehbar gelagerten Perforierscheibe (10), bei dem der Lagerblock (13) mittels einer doppelseitig beaufschlagbaren Kolben-Zylinder-Einheit in die Bewegungsbahn des zu perforierenden Gutes bringbar und wieder aus dieser herausführbar ist, wobei die Kolben-Zylinder-Einheit in einem mit einem Maschinenträger verbindbaren Befestigungsteil (20) untergebracht ist, in dem auch Führungsbolzen (15,16) des Lagerblockes (13) verstellbar geführt sind und den Lagerblock (13) unverdrehbar zum Befestigungsteil (20) festlegen, bei dem der Kolben (23) mit Dichtungsringen (24) versehen ist und eine Kolbenstange (25) aufweist, die außerhalb der Kolben-Zylinder-Einheit mit dem Lagerblock (13) verbunden ist,
**dadurch gekennzeichnet**,
daß das quaderförmige Befestigungsteil (20) als Zylinder ausgebildet ist und dazu eine von der dem Lagerblock (13) zugekehrten Seite ausgehende Sacklochbohrung (21) aufweist, in der der Kolben (23) verstellbar geführt ist, daß die Sacklochbohrung (21) mittels einer Verschlußbuchse (26) verschlossen ist, durch die die Kolbenstange (25) herausgeführt ist, und
daß die Sacklochbohrung (21) dem Lagerblock (13) zugekehrt in einen im Durchmesser vergrößerten Endabschnitt (22) übergeht, der einen Absatz zur Anlage der Verschlußbuchse (26) bildet (Fig. 1 und 2).

2. Perforiergerät mit einer in einem U-förmigen Lagerblock (112) drehbar gelagerten Perforierscheibe (110), bei dem der Lagerblock (112) mittels einer doppelseitig beaufschlagbaren Kolben-Zylinder-Einheit in die Bewegungsbahn des zu perforierenden Gutes bringbar und wieder aus dieser herausführbar ist, wobei die Kolben-Zylinder-Einheit in einem mit einem Maschinenträger verbindbaren Befestigungsteil (20) untergebracht ist, in dem auch Führungsbolzen (135,139) des Lagerblockes (112) verstellbar geführt sind und den Lagerblock (112) unverdrehbar zum Befestigungsteil (20) festlegen, bei dem der Kolben (23) mit Dichtungselementen (125,126) versehen ist und eine Kolbenstange (25) aufweist, die außerhalb der Kolben-Zylinder-Einheit mit dem Lagerblock (112) verbunden ist,
**dadurch gekennzeichnet**,
daß der Zylinder (121) als Befestigungsteil plattenförmig ausgebildet und in die Ebene der Perforierscheibe (110) ausgerichtet ist,
daß in einer quaderförmigen, abgedichteten Ausnehmung (127) des Zylinders (121) ein plattenförmiger Kolben (124) verstellbar geführt ist, dessen Kolbenstange (118) im Zylinder (121) verstellbar ist und
daß beide quer zur Verstellrichtung des Kolbens (124) verlaufende Seiten mit den Dichtungselementen (125,126) versehen sind, die allseitig zur Ausnehmung (127) des Zylinders (121) hin abdichten (Fig. 3 und 4).

3. Perforiergerät nach Anspruch 1,
dadurch gekennzeichnet,
daß die Verschlußbuchse (26) mittels eines Sicherungsringes (27) in dem Endabschnitt (22) der Sacklochbohrung (21) festgelegt und in Anlage an dem Absatz gehalten ist.

4. Perforiergerät nach Anspruch 1 oder 3,
dadurch gekennzeichnet,
daß die Führungsbolzen (15,16) des Lagerblockes (13) in Führungsbuchsen (17,18) geführt sind, die in Bohrungen (29) des quaderförmigen Befestigungsteiles (20) eingesetzt und an beiden Enden mittels Sicherungsringen (30,31) unverschiebbar in den Bohrungen (29) gehalten sind.

5. Perforiergerät nach Anspruch 4,
dadurch gekennzeichnet,
daß die Bohrungen (29) sich nur über einen Teil der Dicke des quaderförmigen Befestigungsteils (20) erstrecken und dem Lagerblock (13) abgekehrt in im Durchmesser vergrößerte Endabschnitte (28) übergehen, die auf die Aufnahme des Sicherungsringes (31) zur Festlegung der Führungsbuchsen (17,18) ausgelegt und mittels eines Gewindestopfens (32) verschlossen sind.

6. Perforiergerät nach einem der Ansprüche 1 und 3 bis 5,
dadurch gekennzeichnet,
daß das quaderförmige Befestigungsteil (20) mit einem L-förmigen, einstückig angeformten Teil (34) eine Befestigungsklammer bildet, wobei der dem Befestigungsteil (20) abgekehrte Schenkel des Teils (34) mit einem Durchgangsgewinde (35) zur Aufnahme einer Spannschraube versehen ist.

7. Perforiergerät nach Anspruch 2,
dadurch gekennzeichnet,
daß die Ausnehmung (127) als Durchbruch im Zylinder (121) ausgebildet ist, in die ein Vierkantrohrabschnitt (128,129) als Kolbenführung dicht eingesetzt ist.

8. Perforiergerät nach Anspruch 2 oder 7,
dadurch gekennzeichnet,
daß der Vierkantrohrabschnitt (128,129) mit seinen freien Seitenwänden bündig mit den zugekehrten Seiten des plattenförmigen Zylinders (121) abschließt.

9. Perforiergerät nach Anspruch 2,
dadurch gekennzeichnet,
daß die Ausnehmung (127) als Durchbruch im Zylinder ausgebildet ist und
daß nach dem Einsetzen des Kolbens (124) in die Ausnehmung (127) diese mittels zweier Abdeckplatten (147,148) dicht abgedeckt und der Zylinderraum für den Kolben (124) vervollständigt ist.

10. Perforiergerät nach einem der Ansprüche 2 und 7 bis 9,
dadurch gekennzeichnet,
daß die Abmessung des Zylinders in Richtung der Drehachse (111) der Perforierscheibe (110) gleich der zugeordneten Abmessung des Lagerblockes (112) entspricht.

11. Perforiergerät nach einem der Ansprüche 2 und 7 bis 10,
dadurch gekennzeichnet,
daß die Ansteuerleitungen (143,145) für die Kolben-Zylinder-Einheit in den Zylinder (121) eingebracht sind und im Bereich der quer zur Bewegungsrichtung des Kolbens (124) gerichteten Seiten in die Ausnehmung (127) des Zylinders (121) einmünden und in einer parallel zur Verstellrichtung des Kolbens (124) verlaufenden Seite als Schraubanschlüsse (144,146) zugänglich sind.

12. Perforiergerät nach einem der Ansprüche 2 und 7 bis 11,
dadurch gekennzeichnet,
daß die Kolbenstange (118) mittels eines Dichtungselementes (134) abgedichtet ist, das mittels eines Verschlußstückes (132) in einem erweiterten Absatz (131) der Bohrung im Zylinder für die Aufnahme der Kolbenstange (118) gehalten ist.

13. Perforiergerät nach einem der Ansprüche 2 und 7 bis 12,
dadurch gekennzeichnet,
daß der Zylinder (121) außerhalb der Kolben-Zylinder-Einheit in dem dem Lagerblock (112) abgekehrten Endbereich eine im Querschnitt T-förmige Befestigungsaufnahme (149) aufweist, in die eine Gewindebohrung (150) für eine Feststellschraube einmündet.

## Claims

1. Perforator, having a perforating disc (10), which is rotatably mounted in a U-shaped bearing block (13), wherein the bearing block (13) can be brought into the path of displacement of the material to be perforated by means of a piston-and-cylinder unit, which can be acted upon bilaterally, and said bearing block can be guided from the path of displacement again, the piston-and-cylinder unit being accommodated in a securing member (20), which is connectable to a machine carrier and in which guide bolts (15, 16) of the bearing block (13) are also adjustably guided and secure the bearing block (13) in a non-rotatable manner relative to the securing member (20), wherein the piston (23) is provided with sealing rings (24) and has a piston rod (25), which is connected to the bearing block (13) externally of the piston-and-cylinder unit, characterised in that the parallelepiped securing member (20) is in the form of a cylinder and additionally has a blind-end bore (21), which extends from the end facing the bearing block (13) and in which the piston (23) is adjustably guided, in that the blind-end bore (21) is terminated by means of a closure bush (26), through which the piston rod (25) extends, and in that the blind-end bore (21), facing the bearing block (13), passes into an end portion (22), which has an enlarged diameter and forms a shoulder for the abutment of the closure bush (26) (Figs. 1 and 2).

2. Perforator, having a perforating disc (110), which is rotatably mounted in a U-shaped bearing block (112), wherein the bearing block (112) can be brought into the path of displacement of the material to be perforated by means of a piston-and-cylinder unit, which can be acted upon bilaterally, and said bearing block can be guided from the path of displacement again, the piston-and-cylinder unit being accommodated in a securing member (20), which is connectable to a machine carrier and in which guide bolts (135, 139) of the bearing block (112) are also adjustably guided and secure the bearing block (112) in a non-rotatable manner relative to the securing member (20), wherein the piston (23) is provided with sealing members (125, 126) and has a piston rod (25), which is connected to the bearing block (112) externally of the piston-and-cylinder unit, characterised in that the cylinder (121) has a plate-like configuration as the securing member and is orientated into the plane of the perforating disc (110), in that a plate-shaped piston (124) is adjustably guided in a parallelepiped, sealed recess (127) in the cylinder (121), the piston rod (118) of said piston being adjustable in the cylinder (121), and in that both ends, extending transversely relative to the direction of adjustment of the piston (124), are provided with the sealing members (125, 126), which seal all round in a direction towards the recess (127) in the cylinder (121) (Figs. 3 and 4).

3. Perforator according to claim 1, characterised in that the closure bush (26) is secured in the end portion (22) of the blind-end bore (21) by means of a securing ring (27) and is retained in abutment with the shoulder.

4. Perforator according to claim 1 or 3, characterised in that the guide bolts (15, 16) of the bearing block (13) are guided in guide bushes (17, 18), which are inserted into bores (29) in the parallelepiped securing member (20) and are non-displaceably retained in the bores (29) at both ends by means of securing rings (30, 31).

5. Perforator according to claim 4, characterised in that the bores (29) extend over only a portion of the thickness of the parallelepiped seuring member (20) and, remote from the bearing block (13), pass into end portions (28), which have an enlarged diameter and are adapted to the receiver of the securing ring (31) for securing the guide bushes (17, 18) and are terminated by means of a threaded plug (32).

6. Perforator according to one of claims 1 and 3 to 5, characterised in that the parallelepiped securing member (20) forms a securing clamp together with an L-shaped, integrally formed member (34), the arm of the member (34) remote from the securing member (20) being provided with a continuous thread (35) for receiving a tightening screw.

7. Perforator according to claim 2, characterised in that the recess (127) is an opening in the cylinder (121), into which a square tubular portion (128, 129) is tightly inserted as a piston guide.

8. Perforator according to claim 2 or 7, characterised in that the square tubular portion (128, 129) terminates with its free lateral walls flush with the facing ends of the plate-shaped cylinder (121).

9. Perforator according to claim 2, characterised in that the recess (127) is an opening in the cylinder, and in that, after the piston (124) has been inserted into the recess (127), the latter is tightly covered by means of two cover plates (147, 148), and the cylindrical space for the piston (124) is completed.

10. Perforator according to one of claims 2 and 7 to 9, characterised in that the dimension of the cylinder in the direction of the rotary axle (111) of the perforating disc (110) corresponds identically with the associated dimension of the bearing block (112).

11. Perforator according to one of claims 2 and 7 to 10, characterised in that the control lines (143, 145) for the piston-and-cylinder unit are introduced into the cylinder (121) and, in the region of the ends orientated transversely relative to the direction of displacement of the piston (124), extend into the recess (127) in the cylinder (121) and are accessible, as screw connections (144, 146), in an end extending parallel to the direction of displacement of the piston (124).

12. Perforator according to one of claims 2 and 7 to 11, characterised in that the piston rod (118) is sealed by means of a sealing member (134), which is retained in a widened shoulder (131) of the bore in the cylinder for receiving the piston rod (118) by means of a closure member (132).

13. Perforator according to one of claims 2 and 7 to 12, characterised in that the cylinder (121) has, externally of the piston-and-cylinder unit in the end region remote from the bearing block (112), a securing receiver (149), which is of a T-shaped cross-section and into which a threaded bore (150) for a securing screw extends.

## Revendications

1. Appareil perforateur avec un disque perforateur (10) monté à rotation dans un support en forme de U (13), appareil dans lequel le support (13) peut au moyen d'une unité piston-cylindre à double action, être placé dans le trajet de l'article à perforer et peut de nouveau en être éloigné. l'unité piston-cylindre étant logée dans un élément de fixation (20) pouvant être relié au châssis de machine, élément de fixation dans lequel sont également guidés de manière réglable des boulons de guidage (15, 16) du support (13), lesdits boulons de guidage assujettissant à l'abri de la rotation le support (13) sur l'élément de fixation (20), appareil dans lequel le piston (23) est équipé de joints d'étanchéité (24) et présente une tige de piston (25) qui est, à l'extérieur de l'unité piston-cylindre , reliée au support (13),
caractérisé
par le fait que l'élément de fixation (20) de forme parallélépipédique est un cylindre et présente une forure à fond plein (21) issue du côté faisant face au support (13) forure dans laquelle est guidé de manière réglable le piston (23),
par le fait que la forure à fond plein (21) est fermée au moyen d'une douille d'obturation (26) à travers laquelle la tige du piston (25) est passée vers l'extérieur, et
par le fait que la forure à fond plein (21) du côté orienté vers le support (13) se transforme en un tronçon terminal (22) à diamètre plus grand, lequel forme un épaulement pour l'application de la douille d'obturation (26) (Figs. 1 et 2).

2. Appareil perforateur avec un disque perforateur (110) monté à rotation dans un support en forme de U (112), appareil dans lequel le support (112), peut au moyen d'une unité piston-cylindre à double action, être placé dans le trajet de l'article à perforer et peut de nouveau en être éloigné. l'unité piston-cylindre étant logée dans un élément de fixation (20) pouvant être relié au châssis de machine, élément de fixation dans lequel sont également guidés de manière réglable des boulons de guidage (135, 139) du support (112), lesdits boulons de guidage assujettissant à l'abri de la rotation le support (112) sur l'élément de fixation (20), appareil dans lequel le piston (23) est équipé de joints d'étanchéité (125, 126) et présente une tige de piston (25) qui est, à l'extérieur de l'unité piston-cylindre, reliée au support (112),
caractérisé
par le fait que le cylindre (121) faisant office d'élément de fixation est en forme de plaque et est orienté suivant le plan du disque perforateur (110),
par le fait que dans un évidement hermétique et de forme parallélépipédique (127) du cylindre (121) est guidé de manière réglable un piston (124) en forme de plaque, piston dont la tige (118) est réglable à l'intérieur du cylindre (121), et
par le fait que les deux côtés orientés transversalement par rapport à la direction de réglage du piston (124) sont dotés d'éléments d'étanchéité (125, 126) qui assurent de toutes parts l'étanchéité par rapport à l'évidement (127) du cylindre (121) (Figs. 3 et 4).

3. Appareil perforateur suivant la revendication 1,
caractérisé
parle fait que la douille d'obturation (26) est assujettie dans le tronçon terminal (22) de la forure à fond plein (21) au moyen d'une bague de sécurité (27) et est également appliquée contre l'épaulement.

4. Appareil perforateur suivant la revendication 1 ou la revendication 3,
caractérisé
par le fait que les boulons de guidage (15, 16) du support (13) sont guidés dans des douilles de guidage (17, 18) qui sont montées dans des forures (29) de l'élément de fixation de forme parallélépipédique (20) et sont, aux deux extrémités, maintenus à l'abri du glissement dans les forures (29) au moyen de bagues de sécurité (30, 31).

5. Appareil perforateur suivant la revendication 4,
caractérisé
par le fait que les forures (29) ne s'étendent que sur une partie de l'épaisseur de l'élément de fixation de forme parallélépipédique (20) et, du côté non orienté vers le support (13), se convertissent en des tronçons terminaux (28) à diamètre plus grand, qui sont prévus pour la réception de la bague de sécurité (31) pour l'assujettissement des douilles de guidage (17, 18) et qui sont fermés au moyen d'un bouchon fileté (32).

6. Appareil perforateur suivant l'une quelconque des revendications 1 et de 3 à 5,
caractérisé
par le fait que conjointement avec un élément en forme de L (34) en formant partie intégrante, l'élément de fixation de forme parallélépipédique (20) constitue une agrafe de fixation, l'aile de l'élément (34) qui n'est pas orientée vers l'élément de fixation (20) présentant un filetage de passage (35) pour la réception d'une vis de serrage.

7. Appareil perforateur suivant la revendication 2,
caractérisé
par le fait que l'évidement (127) a la forme d'un passage dans le cylindre (121), passage dans lequel est monté de manière hermétique un tronçon de tube à quatre pans (128, 129) faisant office de guidage de piston.

8. Appareil perforateur suivant la revendication 2 ou la revendication 7,
caractérisé
par le fait que les parois latérales libres du tronçon de tube à quatre pans (128, 129) sont situées à fleur des côtés qui leur font face du cylindre (121) en forme de plaque.

9. Appareil perforateur suivant la revendication 2,
caractérisé
par le fait que l'évidement (127) a la forme d'un passage dans le cylindre et
par le fait qu'après la mise en place du piston (124) dans l'évidement (127), celui-ci est recouvert hermétiquement au moyen de deux plaques de recouvrement (147, 148) et que l'enceinte cylindrique pour le piston (124) est complétée.

10. Appareil perforateur suivant l'une quelconque des revendications 2 et 7 à 9,
caractérisé
par le fait que la dimension du cylindre en direction de l'axe de rotation (111) du disque perforateur (110) correspond à la dimension associée du support (112).

11. Appareil perforateur suivant l'une quelconques des revendications 2 et 7 à 10,
caractérisé
par le fait que les canalisations de commande (143, 145) pour l'unité piston-cylindre sont disposées dans le cylindre (121) et débouchent dans l'évidement (127) du cylindre (121) dans la région des côtés orientés transversalement à la direction du mouvement du piston (124) et sont accessibles sous forme de raccords à vis (144, 146) dans un côté disposé parallèlement à la direction de réglage du piston (124).

12. Appareil perforateur suivant l'une quelconque des revendications 2 et 7 à 11,
caractérisé
par le fait que la tige du piston (118) est rendue hermétique au moyen d'un élément d'étanchéité (134) qui est maintenu au moyen d'une pièce d'obturation (132) dans un épaulement élargi (131) de la forure dans le cylindre, pour la réception de la tige du piston (118).

13. Appareil perforateur suivant l'une quelconque des revendications 2 et 7 à 12,
caractérisé
par le fait qu'à l'extérieur de l'unité piston-cylindre, le cylindre (121) présente, dans la région terminale non orientée vers le support (112), un logement de fixation (149) à section transversale en forme de T, logement dans lequel débouche une forure filetée (150) destinée à une vis de serrage.
